# EUROPEAN PATENT SPECIFICATION

(11) **EP 0 572 394 B1**
(45) Date of publication and mention of the grant of the patent: **17.09.1997**
(21) Application number: 91908332.9
(22) Date of filing: 19.04.1991
(51) Int. Cl.: B65H 31/30, B65G 57/20, B65G 61/00

(54) **PALLETIZER**
PALETTIERER
PALETTISEUR

(30) Priority: 19.04.1990 NO 901738
(43) Date of publication of application: 08.12.1993
(73) Proprietor: NORLITO MASKIN A/S, N-0491 Oslo 4 (NO)
(72) Inventor: Röste, Kolbjörn, N-0378 Oslo 3 (NO)
(74) Representative: LOUIS, PÖHLAU, LOHRENTZ & SEGETH
(86) International application number: PCT/NO91/00062
(87) International publication number: WO 91/16259

(56) References cited:
- EP-A- 0 156 094
- DE-B- 1 109 584
- GB-A- 1 169 449
- US-A- 4 750 132

## Description

The present invention concerns a palletizing device for signature stacks comprising a main frame and a moveable slide guide, said moveable slide guide being moveable in a first direction, a moveable frame connected to the moveable slide guide and moveable in a second direction, a guiding device for positioning the moveable frame, and a piston for moving clamps along rails in a third direction, which is perpendicular to the second direction.

There are previously known several types of loading devices for goods on pallets, so-called palletizers, but none of these are known to have the possibility for individual handling of the stacks of goods on the pallets or any possibility to remove the goods from such pallets, so-called depalletizing, after the goods have been placed on the pallet.

From the US-A 4 750 132 there is known a signature pack transfer apparatus which picks up individual signature stacks. A transfer head assembly travels along two rails and has a jaw assembly. The jaw assembly has two jaws which can be moved towards or away from each other to pick up or release signatures.

However, this known apparatus does not disclose that multiple stacks of signatures can be moved. Secondly, the method for clamping the stack involves a machine screw. Finally, the entire transfer head assembly is mounted on and travels along two rails as described on column 3, lines 12-22, and column 6, lines 15-20.

The EP-A 0 156 094 relates to a machine for loading bundles of signatures onto pallets. This known apparatus comprises a gripper device which is provided with a pair of parallel horizontal guides in which slide two jaws. During a closure operation, the jaws of the gripper device approach one another to clamp the opposite ends of a bundle. The said apparatus does not have individually moveable clamps, or at least two pairs of clamps. Moreover, the apparatus only grips one stack at a time.

The present invention concerns thus such a device, a so-called palletizer machine, where each item on the pallet may be handled individually as well as depalletized by one and the same device.

To achieve such a handling possibility the palletizer according to the invention is characterized in that in the moveable frame there are at least two of said rails whereby on each rail at least a pair of opposing clamps is mounted, and each individual clamp of each pair is individually moveable along the rails.

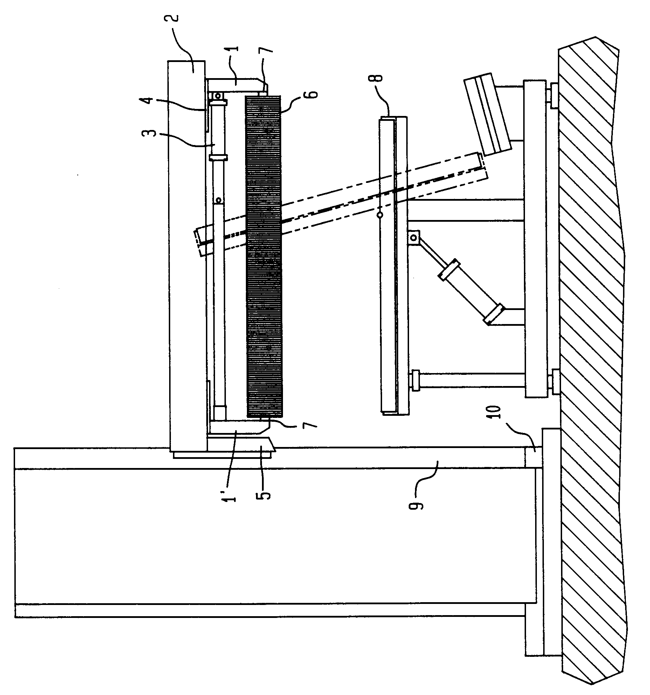

In the attached figure there is shown a preferred embodiment of such a palletizer being especially suited for the handling of paper stacks. The palletizer is assembled from individually operated clamp pairs 1, 1', whereof one or the other clamp of the respective clamp pair may be stationary or moveable or both may be movable. The respective piston may be pneumatically, hydraulically or mechanically operated.

Vertical leading tracks 5 are conncected with a slide guide 9. Said tracks 5 being e.g. operated mechanically, magnetically or electrically. Between the clamps 1, 1' there is shown a held stack of sheets 6.

At the end of the clamps 1, 1' there are situated clamp end-pieces 7. These end-pieces 7 may be rotated in the vertical plane so that the stack of sheets 6 being held between the clamps, may be rotated to any angle, preferably 90° or 180° relative to the original position. This rotation is also performed by rotating parts (not shown) being present inside the clamps 1, 1' and being connected to the end pieces 7.

The palletizer being shown in the figure is illustrated in connection with a tilting table 8 of a per se known type, where the end positions of the tilting table has been shown in outline. On such a tilting table it is usual to position a number of sheet stacks, e.g. 4, and the palletizer according to the invention is accordingly equipped with a corresponding number of clamps for handling a corresponding number of stacks. It is thus possible to equip the palletizing machine according to the invention with at least two, and preferably four pair of clamps whereof each clamp may be rotated individually as indicated above. In connection with such a tilting table 8 the leading tracks 5 are connected with the slide giude 9 for correctly situating the tracks 4 over the tilting table.

To transport the sheet stack(s) 6 from a position over the tilting table to another place for storage, e.g. a pallet (not shown), the frame 9 is moved parallell to an edge of the tilting table 8 on tracks 10.

For locating the clamps 1, 1' correctly relatively to the stack 6, the tilting table 8 and the loading pallet, the device is equipped per se known indicating devices, and is being positioned by using a PLS-system, puls counters and photocells being known in the art per se.

By equipping the palletizing machine with clamps of the type previously disclosed it is possible to both handle each stack of sheets individually, rotate the stack of sheets about an axis, as well as use the palletizing machine for depalletizing stacks of sheets or other articles by mainly using the above disclosed function in reverse.

Such a palletizing machine as is disclosed above may also fit into a larger system for handling goods in store, wherein each item in the store has been given a certain position to which the palletizing machine according to the invention may respond, and wherein each item may be handled by using the suitable clamps in the palletizer.

## Claims

1. A palletizing device for signature stacks comprising a main frame and a moveable slide guide (9), said movable slide guide (9) being moveable in a first direction, a moveable frame (2) connected to the moveable slide guide (9) and moveable in a second direction, a guiding device for positioning the moveable frame (2), and a piston (3) for moving clamps (1, 1') along rails (4) in a third direction which is perpendicular to the second direction,
**characterized in that**
in the moveable frame (2) there are at least two of said rails (4) whereby on each rail at least a pair of opposing clamps (1, 1') is mounted, and each individual clamp (1, 1') of each pair is individually moveable along the rails.

2. The device according to claim 1,
**characterized in that**
the piston (3) is pneumatic.

3. The device according to claims 1 or 2,
**characterized in that**
the moveable frame (2) has four rails (4) and four pairs of clamps (1, 1').

## Patentansprüche

1. Paletierer für Stapel mit einem Hauptrahmen und einer in einer ersten Richtung beweglichen Gleitführung (9), wobei an die bewegliche Gleitführung (9) ein beweglicher Rahmen (2) angeschlossen ist, der in einer zweiten Richtung beweglich ist, eine Führungsvorrichtung zur Positionierung des beweglichen Rahmens (2) vorgesehen ist, und ein Kolben (3) zur Bewegung von Klammern (1,1') entlang von Schienen (4) in einer dritten Richtung vorgesehen ist, die zur zweiten Richtung senkrecht orientiert ist,
**dadurch gekennzeichnet,**
daß der bewegliche Rahmen (2) mindestens zwei Schienen (4) aufweist, wobei an jeder Schiene (4) mindestens ein Paar Klammern (1, 1') angebracht sind, die sich gegenüberliegen, wobei jede Klammer (1, 1') jedes Klammer-Paares individuell entlang den Schienen (4) bewegbar ist.

2. Paletierer nach Anspruch 1,
**dadurch gekennzeichnet,**
daß der Kolben (3) von einem pneumatischen Kolben gebildet ist.

3. Paletierer nach Anspruch 1 oder 2,
**dadurch gekennzeichnet,**
daß der bewegliche Rahmen (2) vier Schienen (4) und vier Paare von Klammern (1, 1') aufweist.

## Revendications

1. Dispositif pour la mise sur palettes de piles de documents comprenant un châssis principal et un guide (9) déplaçable en coulissement, ledit guide (9) déplaçable en coulissement pouvant se déplacer dans une première direction, un châssis déplaçable (2) connecté au guide (9) déplaçable en coulissement et pouvant se déplacer dans une seconde direction, un dispositif de guidage pour le positionnement de châssis déplaçable (2) et un piston (3) destiné à déplacer des pinces (1, 1') le long de rails (4) dans une troisième direction qui est perpendiculaire à la seconde direction,
caractérisé en ce que
dans le châssis déplaçable (2) sont disposés au moins deux desdits rails (4), au moins une paire de pinces opposées (1, 1') étant montée sur chaque rail, et chaque pince individuelle (1, 1') de chaque paire étant déplaçable individuellement le long des rails.

2. Le dispositif selon la revendication 1, caractérisé en ce que le piston (3) est pneumatique.

3. Le dispositif selon la revendication 1 ou 2, caractérisé en ce que le châssis déplaçable (2) comporte quatre rails (4) et quatre paires de pinces (1, 1').
